# EUROPÄISCHE PATENTSCHRIFT

(11) **EP 3 814 735 B1**
(45) Veröffentlichungstag und Bekanntmachung des Hinweises auf die Patenterteilung: **21.08.2024**
(21) Anmeldenummer: 19744614.9
(22) Anmeldetag: 26.06.2019
(51) Int. Cl.: G01L 5/04, G01L 5/107, B60P 7/08, B60P 3/34

(54) **VERFAHREN ZUM ÜBERWACHEN VON MITTELS ZUGELEMENTEN UND VORZUGSWEISE SPANNGURTEN ARBEITENDEN TRANSPORTSICHERUNGEN**
METHOD FOR MONITORING TRANSPORT SECURING MEANS WHICH OPERATE BY MEANS OF TENSIONING ELEMENTS, PREFERABLY TENSIONING STRAPS
PROCÉDÉ DE SURVEILLANCE DE SÉCURITÉS DE TRANSPORT FONCTIONNANT AU MOYEN D'ÉLÉMENTS DE TRACTION ET DE PRÉFÉRENCE DE COURROIES DE SERRAGE

(30) Priorität: 28.06.2018 DE 102018115615
(43) Veröffentlichungstag der Anmeldung: 05.05.2021
(73) Patentinhaber: BPW Bergische Achsen KG, 51674 Wiehl (DE)
(72) Erfinder: ESSERT, Adrian, 53127 Bonn (DE); LAMERS, Christopher, 51063 Köln (DE); KOBLER, Jan-Philipp, 51766 Engelskirchen (DE)
(74) Vertreter: DREISS Patentanwälte PartG mbB
(86) Internationale Anmeldenummer: PCT/DE2019/100588
(87) Internationale Veröffentlichungsnummer: WO 2020/001703

(56) Entgegenhaltungen:
- EP-A1- 2 199 151
- WO-A1-2009/113873
- DE-A1- 102016 113 981
- DE-U1- 20 305 429
- FR-A1- 2 866 290
- US-A1- 2013 162 420
- US-B1- 7 112 023

## Beschreibung

Die Erfindung betrifft ein Verfahren zum Überwachen von mittels Zugelementen und vorzugsweise Spanngurten arbeitenden Transportsicherungen an einem Transportfahrzeug.

Um die Sicherheit bei Gütertransporten auf der Straße, der Schiene, auf dem Wasser oder in der Luft zu erhöhen, ist eine ausreichende Spannkraft in den üblicherweise zur Ladungssicherung verwendeten Zugelementen und insbesondere Spanngurten wichtig. Vor allem grö-ßere Güter werden auf den Ladeflächen mit Hilfe von an den Ladeflächen verankerten Spanngurten befestigt, und auf diese Weise verzurrt. Die Gurte verhindern ein ungewolltes Verrutschen oder sogar Kippen der Ladung auf der Ladefläche, und mindern dadurch die Sicherheitsrisiken beim Warentransport. Dabei dürfen, in Abhängigkeit von der Art und dem Gewicht der Ladung, bestimmte Spannkräfte in den Spanngurten nicht unterschritten werden. Andererseits ist auch zu vermeiden, dass die Spanngurte zu fest angezogen und damit die zu sichernde Ware zu stark druckbelastet wird.

Der wesentliche Effekt der Spanngurte besteht in der Erzeugung einer erhöhten Haftreibung zwischen dem zu sichernden Gut und der Ladefläche durch das Erhöhen der senkrecht auf die Ladefläche wirkenden Normalkraft. Allerdings ist nach dem Abschluss des üblicherweise mit Hilfe von Ratschenverschlüssen durchgeführten Spannvorgangs die Spannkraft im Gurt nicht wirklich konstant, sondern sie kann sich durch Setzungsprozesse im Spanngurt oder aufgrund von geringfügigen Bewegungen der zu sichernden Ladung während des Transports verändern. Es ist daher wünschenswert, dass auch nach Abschluss der eigentlichen Ladungssicherungsmaßnahmen und für die Dauer des Transports die Wirksamkeit der verwendeten Spanngurte überprüft und überwacht werden kann. Auf diese Weise lässt sich zum Beispiel sicherzustellen, dass Spannkräfte nicht unter- bzw. überschritten werden und gegebenenfalls durch den Fahrzeugführer Maßnahmen ergriffen werden können, die Wirksamkeit der Ladungssicherung zu überprüfen und zu korrigieren.

Aus der WO 2017 / 130 246 A1 ist ein insgesamt blockartig gestaltetes Zugspannungs-Messgerät bekannt mit einem Paar erster Tragrollen, einem Pressabschnitt, der an einer Position angeordnet ist, die der Mitte des Paars erster Tragrollen gegenüberliegt, und einer Kraftmessdose. Die Kraftmessdose erfasst die von dem Gurt ausgehende Querkraft auf den Pressabschnitt. Diese Querkraft wiederum resultiert aus der Spannkraft im Gurt, die auf diese Weise errechnet und auf einem in das Zugspannungs-Messgerät einsetzbaren Speichermedium abgespeichert werden kann. Das Speichermedium, vorzugsweise eine SD-Speicherkarte, lässt sich später entnehmen und z. B. auf einem Computer zu Prüf- oder Dokumentationszwecken auslesen.

Auch aus der DE 10 2014 012 508 A1 ist ein System zum Erfassen der Zugkräfte in Spanngurten, welche der Ladungssicherung von Stückgütern dienen, bekannt. Auch bei diesem System erfasst ein Sensor die Kraft in den Spanngurten. Ferner sind im Bereich der Ladefläche Ladungsmelder angeordnet, welche das Vorhandensein von Stückgütern auf der Ladefläche erfassen. Die Signale aller Sensoren und Ladungsmelder werden drahtlos an eine zentrale Kontrollbaugruppe übermittelt, die mit einem Speicher für die Ergebnisse der Abfragung aller Sensoren und Ladungsmelder versehen ist. In dem Speicher sind die Ergebnisse zumindest der jeweils letzten Abfragung speicherbar. Die Ergebnisse sind außerdem auf einem Display im Führerstand des Fahrzeuges anzeigbar, und/oder von einer Kontrollstelle außerhalb des Fahrzeugs abfragbar. In der DE 10 2014 012 508 A1 wird ferner vorgeschlagen, während des Beladens des Fahrzeugs die Informationen aus der Kontrollbaugruppe auf ein Smartphone zu leiten oder auf ein anderes, mobiles Display, welches von dem Fahrer während des Verzurrens der Ladung beobachtet werden kann. Die Informationen sind auch während der Fahrt über das Smartphone abrufbar.

Auch aus der DE 10 2016 113 981 A1, aus der WO 2009/113873 A1, aus der EP 2 199 151 A1 und aus der DE 203 05 429 U1 sind Vorrichtungen bzw. Verfahren zur Sensierung einer Gurtspannkraft bekannt.

Die Aufgabe der Erfindung ist es, ein Verfahren zum Überwachen von mittels Zugelementen und vorzugsweise Spanngurten arbeitenden Transportsicherungen an einem Transportfahrzeug zu entwickeln, welches auch nach dem Abschluss der eigentlichen Ladungssicherungsmaßnahmen eine verlässliche Überwachung der Wirksamkeit aller verwendeten Zugelemente und vorzugsweise Spanngurte ermöglicht.

Gelöst wird diese Aufgabe durch ein Verfahren mit den Merkmalen des Anspruchs 1. Bei diesem Verfahren werden zum Überwachen der Transportsicherungen mindestens zwei der Zugelemente mit jeweils mindestens einer daran befestigten Überwachungseinheit versehen. Die Überwachungseinheit umfasst mindestens einen Sensor und eine Sendeeinheit, wobei der Sensor einen für die Zugkraft in dem Zugelement repräsentativen Istwert erfasst, und die Sendeeinheit Statussignale drahtlos an eine auf dem selben Transportfahrzeug vorhandene Kontrolleinheit übermittelt. Die durch die Sendeeinheit übermittelten Statussignale umfassen mindestens
- den Istwert zusammen mit einem bereits zuvor in der Überwachungseinheit gespeicherten Sollwert, oder
- einen aus dem Istwert und dem bereits zuvor in der Überwachungseinheit gespeicherten Sollwert abgeleiteten Differenzwert.

Von Vorteil ist, dass nicht nur der für die aktuelle Zugkraft in dem Zugelement repräsentative Istwert an die Kontrolleinheit übermittelt wird, sondern auch der als Vergleichswert dienende Sollwert oder ein Differenzwert aus dem Soll- und dem aktuellen Istwert. Denn in der Praxis des Transportgewerbes ist es häufig, dass der Fahrer bzw. Fahrzeuglenker wechselt. Ein solcher Wechsel würde dann auch die vom Fahrer persönlich mitgeführte, z.B. als Smartphone ausgebildete Kontrolleinheit betreffen. Wären die Sollwerte ausschließlich in der Kontrolleinheit selbst abgespeichert, müssten diese Vergleichsdaten bei einem Fahrerwechsel zunächst von der vom bisherigen Fahrer mitgeführten Kontrolleinheit auf die von dem neuen Fahrer mitgeführte Kontrolleinheit übertragen werden, etwa durch einen entsprechenden drahtlosen Datenaustausch über Bluetooth. Diese Schritte entfallen, wenn die Sollwerte in der Überwachungseinheit, d.h. unmittelbar an den Zugelementen, abgespeichert bleiben und stets gemeinsam mit den aktuellen Istwerten an die Kontrolleinheit übermittelt werden.

Vorzugsweise erfasst der Sensor, welcher Bestandteil der an den Zugelementen befestigten Überwachungseinheit ist, den für den tatsächlichen Kraftwert repräsentativen Istwert in regelmäßigen, vorgegebenen Zeitabständen. Die Zeitabstände können in der Überwachungseinheit vorgegeben, z.B. einstellbar sein. Von Vorteil ist insbesondere, wenn die Sendeeinheit Statussignale an die Kontrolleinheit übermittelt
- in regelmäßigen, vorgegebenen Zeitabständen
- und/oder sobald der von dem Sensor aktuell erfasste Istwert oder eine Gruppe aktuell erfasster Istwerte mehr als eine vorgegebene Abweichung von einem vorher erfassten Istwert oder einer Gruppe vorher erfasster Istwert aufweist.

Die Überwachungseinheit speichert selbsttätig als Sollwert jene Zugkraft ab, die der Sensor zum Zeitpunkt des maximalen Festzurrens des überwachten Zugelements oder unmittelbar danach als Kraftwert erfasst. Vorzugsweise wird als Zeitpunkt des maximalen Festzurrens zum Beispiel jener Zeitpunkt angenommen, zu dem die Zugkraft in dem Zugelement nach einem Ansteigen einen anschließend nicht mehr überschrittenen Maximalwert aufweist.

Zum Zwecke einer externen Datenauswertung und Kontrolle besteht die Möglichkeit, dass die Sendeeinheit die Statussignale außer an die Kontrolleinheit auch an einen stationären Empfänger zur Auswertung übermittelt (Telematik). Dieser Empfänger kann z.B. das für den Transport zuständige Logistikunternehmen sein, wo dann die entsprechenden Statussignale zur Ladungssicherung aller derzeit bewegten Fahrzeuge eingehen, und so die Ladungssicherung aus der Ferne überprüfbar ist. Alternativ besteht die Möglichkeit, dass nicht die Überwachungseinheit selbst, sondern die Kontrolleinheit die an sie übermittelten Statussignale per Telematik an den stationären Empfänger zur Auswertung und Kontrolle übermittelt.

Vorzugsweise gibt die Kontrolleinheit ein für den Fahrer wahrnehmbares optisches und/oder akustisches Warnsignal ab, sobald der aus dem Istwert und dem gespeicherten Sollwert abgeleitete Differenzwert einen vorgegebenen Grenzwert übersteigt oder die prozentuale Abweichung einen bestimmten Wert übersteigt.

Um mehrere Spanngurte parallel und unabhängig voneinander zu überwachen, können die durch die Sendeeinheit übermittelten Statussignale außerdem eine Gerätekennung umfassen, wobei die Gerätekennungen aller auf dem Transportfahrzeug vorhandenen Überwachungseinheiten zueinander unterschiedlich sind, also individuell identifizierbar sind.

Hinsichtlich der Überwachungseinheit wird vorgeschlagen, dass diese in einem Gehäuse angeordnet ist und von einer in dem Gehäuse angeordneten Spannungsquelle, vorzugsweise Batterie, mit elektrischer Energie versorgt wird. Vorzugsweise ist die Überwachungseinheit dazu eingerichtet, die Restspannung der Spannungsquelle zu überwachen, wobei die Sendeeinheit entsprechende Batteriezustandssignale drahtlos an die Kontrolleinheit übermittelt. In diesem Fall umfassen die übermittelten Statussignale auch entsprechende Batteriezustandssignale.

Gemäß einer weiteren Ausgestaltung kann an der Überwachungseinheit eine vorzugsweise optische Anzeige für den Batteriezustand erfolgen, vorzugweise ergänzt durch eine Alarmfunktion.

Um Batteriestrom zu sparen, schaltet sich die Überwachungseinheit selbsttätig ein und bleibt dann eingeschaltet, wenn und solange der durch den Sensor erfasste Istwert größer als Null *(Weiter auf Seite 5 der ursprünglichen Beschreibung)*
ist. Die Überwachungseinheit schaltet selbsttätig dann aus, wenn der Istwert auf null gefallen und seitdem eine vorgegebene Zeitdauer verstrichen ist. Diese Zeitdauer sollte mindestens 10 Minuten betragen. Denn ein Abfallen des Istwerts auf null kann z.B. durch ein Versagen des Spanngurts ausgelöst sein. Gerade in dieser Situation ist es wichtig, dass für einen gewissen Zeitraum weiterhin Statussignale gesendet werden, damit der Fahrer diese Situation realisieren kann.

Bevorzugt erfolgt unmittelbar an der Überwachungseinheit eine optische Anzeige für Kraftwerte, vorzugsweise in Form einer außen an der Überwachungseinheit angeordneten LED-Reihe. Dabei ist es nicht notwendig, explizite Kraftwerte anzugeben. Die Anzeigen und vorzugsweise LEDs können auch für bestimmte Wertebereiche der Zugkraft stehen.

Die optische Anzeige kann in zwei oder mehr unterschiedliche Wertebereiche aufgeteilt sein, von denen der erste für die Sicherung von solchen Ladegütern steht, bei denen mit hoher Zugspannung in den Zugelementen gearbeitet werden kann, hingegen ein zweiter Wertebereich für solche Güter steht, bei denen, etwa wegen der mechanischen Empfindlichkeit dieser Güter, die Zugspannung in den Zugelementen generell geringer sein muss. Um Batterieenergie zu sparen, sollte die genannte optische Anzeige bei einem Ansteigen des durch den Sensor erfassten Kraftwerts selbsttätig einschalten, und nach einer vorgegebenen Zeitdauer wieder ausschalten.

Vorzugsweise umfasst die Kontrolleinheit ein Empfangsmodul für die übermittelten Statussignale, ein diese Signale verarbeitendes Rechenmodul und eine durch das Rechenmodul gesteuerte Anzeige. Vorzugsweise ist die Anzeige als Display ausgebildet und sie ist, gesteuert durch das Rechenmodul, graphisch in einzelne Display-Zonen unterteilt. Jede Display-Zone ist einer Überwachungseinheit zugeordnet und gibt ausschließlich Werte mit Bezug zu dieser Überwachungseinheit wieder.

Hinsichtlich der Signalübertragung zwischen Überwachungseinheit und Kontrolleinheit wird vorgeschlagen, dass die Sendeeinheit der Überwachungseinheit drahtlos über Bluetooth oder eine WLAN-Verbindung mit dem Empfangsmodul der Kontrolleinheit kommuniziert.

Vorzugsweise ist die Kontrolleinheit ein Smartphone. Praktisch jeder Fahrer bzw. Fahrzeuglenker führt ein solches Smartphone mit sich, so dass zusätzliche Geräte nicht erforderlich sind und ebenso wenig ein Gerätetausch, etwa bei einem Wechsel des bisherigen Fahrzeuglenkers auf einen neuen Fahrzeuglenker.

Falls als Kontrolleinheit ein Smartphone dient, ist das Rechenmodul der Kontrolleinheit eine auf dem Smartphone abgelegte Applikation. Die Anzeige ist das Smartphone-Display. Insbesondere ist die Anzeige in der Weise ausgestaltet, dass für jede der Überwachungseinheiten in Zahlenwerten und/oder als graphisch veranschaulichte Größen wiedergegeben werden
- der Istwert zusammen mit dem Sollwert, oder
- ein vorzugsweise in der Überwachungseinheit aus dem Istwert und dem Sollwert abgeleiteter Differenzwert.

Vorzugsweise ist die Kontrolleinheit dafür eingerichtet, mittels eines Signalstärkeglieds für jede Überwachungseinheit die Signalstärke der von dort empfangenen Signale zu erfassen. Mit dem Signalstärkeglied, welches Bestandteil der Kontrolleinheit ist, sind mehrere Vorteile verbunden.

Ein erster Vorteil besteht in der mittels des Signalstärkeglieds möglichen Ortung einer bestimmten Überwachungseinheit. Denn in der Regel werden sich auf dem Transportfahrzeug mehrere Zugelemente und damit auch mehrere Überwachungseinheiten befinden. Um dem Fahrer bei Erhalt einer Negativmeldung das Auffinden des zu der Meldung gehörenden Zugelements bzw. Spanngurts zu erleichtern, ist ein Ortungssystem vorhanden. Hierzu ist die Kontrolleinheit dazu eingerichtet ist, mittels des Signalstärkeglieds für jede Überwachungseinheit die Signalstärke der von dort empfangenen Signale zu erfassen, und die empfangene Signalstärke so zur Ortung der gesuchten Überwachungseinheit zu nutzen. Praktisch geschieht dies, indem der Fahrer mit der Kontrolleinheit in Gestalt des Smartphones in der Hand an der Ladefläche entlang geht, und ihm aufgrund der von den einzelnen Überwachungseinheiten empfangenen Signalstärken angezeigt wird, welche der Überwachungseinheiten diejenige ist, von der die Negativmeldung ausgeht.

Weitere Vorteile bietet das Signalstärkeglied, wenn dieses außerdem dafür eingerichtet ist, die erfassten Signale zu unterteilen in eine erste Gruppe aus Signalen von zeitlich im Wesentlichen stabiler Signalstärke und eine zweite Gruppe aus Signalen von zeitlich sich deutlich ändernder Signalstärke. Dabei werden für die Durchführung des weiteren Verfahrens nur die Signale der ersten Gruppe berücksichtigt, hingegen werden die Signale der zweiten Gruppe für die weitere Durchführung des Verfahrens ausgeblendet. Denn vor allem bei Antritt einer Fahrt befindet sich das Fahrzeug häufig in der Nähe anderer Fahrzeuge, etwa auf dem Betriebshof einer Spedition. Auch in diesen weiteren Fahrzeugen befinden sich vergleichbare Überwachungssysteme, von denen daher ebenfalls Signale ausgehen, die aber keine Berücksichtigung finden sollten. Indem bei Fahrtantritt und gegebenenfalls auch später während der Fahrt die erfassten Signale unterteilt werden in Signale von zeitlich im Wesentlichen stabiler Signalstärke und Signale von zeitlich sich deutlich ändernder Signalstärke und alle Signale der zweiten Gruppe für die weitere Datenverarbeitung ausgeblendet werden, verarbeitet die Kontrolleinheit ausschließlich gleichsam bordeigene Signale, und nicht Signale von in der Nähe befindlichen Fremdfahrzeugen. Im Rahmen dieser Vergleichsoperationen kann zusätzlich, mittels eines in der Kontrolleinheit als weitere Applikation (App) vorhandenen GPS (Global Positioning System) Moduls, verifiziert werden, ob und dass sich das Fahrzeug in Fahrt befindet, und es nicht steht.

Ebenfalls zur erleichterten Ortung einer Überwachungseinheit, von der eine Negativmeldung ausgeht, können die Kontrolleinheit und die Überwachungseinheit auch für einen umgekehrten Kommunikationsweg mit einem von der Kontrolleinheit an die Überwachungseinheit gesendeten Rufsignal ausgebildet sein. In diesem Fall schaltet die Überwachungseinheit bei Erhalt des Rufsignals ein optisches und/oder akustisches Suchsignal und schaltet dieses Suchsignal nach einer vorgegebenen Zeitdauer wieder aus, um Batteriestrom zu sparen.

Schließlich wird vorgeschlagen, dass die Überwachungseinheit in einem Gehäuse angeordnet ist, in dem ein Beschleunigungssensor angeordnet ist. Durch den Beschleunigungssensor werden Stoßereignisse, welche die aktuellen Istwerte beeinflussen können, erfasst, und sie lassen sich bei der Signalauswertung berücksichtigen. Außerdem lässt sich mittels des Beschleunigungssensors die Winkelstellung der Überwachungseinheit feststellen, und damit der Zugwinkel des Spanngurts.

Weitere Einzelheiten und Vorteile ergeben sich aus der nachfolgenden Beschreibung eines anhand von Zeichnungen erläuterten Ausführungsbeispiels. Auf der Zeichnung zeigen:
- Fig. 1: ein schematisch wiedergegebenes Nutzfahrzeug mit einer Ladefläche, auf der mehrere Stückgüter angeordnet sind, die mit Transportsicherungen versehen sind, sowie eine vom Fahrer des Transportfahrzeugs mitgeführte Kontrolleinheit, hier in Gestalt eines Smartphones;
- Fig. 2: einen Schnitt durch eine an einem der Zugelemente der Transportsicherung befestigte Überwachungseinheit;
- Fig. 3: eine Prinzipdarstellung zur Bestimmung von Sollwerten, und
- Fig. 4: eine Prinzipdarstellung zur Überprüfung von Statuswerten, z.B. während der Fahrt.

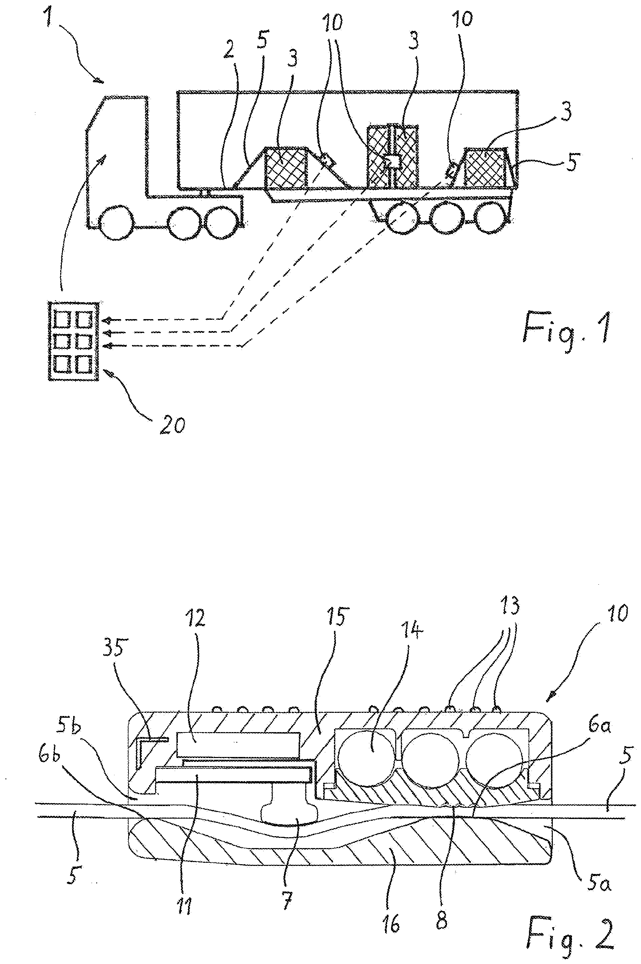

In Fig. 1 wiedergegeben ist ein Transportfahrzeug 1, hier in Gestalt eines Nutzfahrzeugs. Auf der Ladefläche 2 sind als Ladung beispielhaft drei Stückgüter 3 angeordnet, die jeweils durch Ladungssicherungen gegen ein Kippen oder Verrutschen gesichert sind. Die Ladungssicherungen bestehen aus Zugelementen 5 in Gestalt von Spanngurten, die mit ihren beiden Enden in Höhe der Ladefläche 2 befestigt sind, und über das jeweilige Stückgut 3 unter ausreichender Vorspannung gezogen sind. Unter Zugkraft gesetzt wird jeder Spanngurt 5 zum Beispiel über eine an ihm befestigte Ratsche.

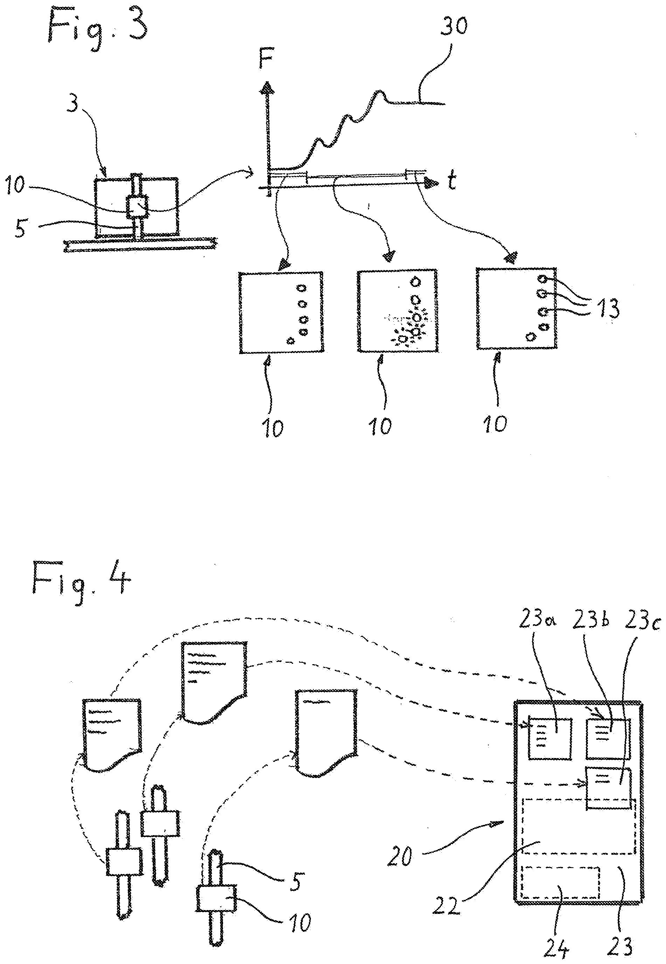

An jedem Spanngurt 5 ist außerdem eine Überwachungseinheit 10 befestigt, welche mit einer Sensorik zum Erfassen der Zugkraft F (Fig. 3) in dem Spanngurt 5 versehen ist, sowie mit einer Sendeeinheit 12. Die Sendeeinheit 12 vermag einen für die Zugkraft F im Gurt repräsentativen Kraftwert (Istwert) an eine Kontrolleinheit 20 zu übermitteln, die sich ebenfalls auf dem Transportfahrzeug befindet.

In Fig. 2 ist die in einem Gehäuse untergebrachte Überwachungseinheit 10 in einem Schnitt längs des auf einer Teillänge durch das Gehäuse hindurchführenden Spanngurts 5 wiedergegeben.

Das Gehäuse der Überwachungseinheit 10 besteht aus einer ersten Gehäusehälfte 15 und einer dieser gegenüberliegenden zweiten Gehäusehälfte 16. Der Begriff der Gehäusehälften ist nicht dahin zu verstehen, dass beide von gleicher Größe sein müssen. Sie können auch von unterschiedlicher Größe sein.

Zwischen einer Gurteintrittsseite 5a und einer Gurtaustrittsseite 5b ist das Zugelement 5 zwischen den Gehäusehälften 15, 16 hindurchgeführt. An der Gehäusehälfte 16 ist nahe der Gurteintrittsseite 5a ein erster Auflagebereich 6a, und nahe der Gurtaustrittsseite 5b ein zweiter Auflagebereich 6b für dieselbe Flachseite des Zugelements 5 ausgebildet. An der anderen Gehäusehälfte 15 befindet sich zwischen den beiden Auflagebereichen 6a, 6b ein Verlagerungselement 7, an dem das Zugelement mit seiner anderen Flachseite anliegt. Das Verlagerungselement 7 ist quer zur Längserstreckung des Zugelements 5 verlagerbar, also beweglich, in der anderen Gehäusehälfte 15 angeordnet. Das Verlagerungselement 7 ist entweder mit einem Sensor 11 wirkverbunden, oder bildet selbst den Sensor 11, um infolge einer durch die Zugkraft in dem Zugelement 5 initiierten seitlichen Auslenkung des Verlagerungselements 7 die in dem Zugelement vorhandene Zugkraft zu detektieren.

Vorzugsweise ist gemäß Figur 2 der Abstand zwischen dem an der Gehäusehälfte 16 ausgebildeten Auflagebereich 6a und einem gegenüberliegenden Auflagebereich 8, welcher sich an der anderen Gehäusehälfte 15 befindet, so gering, dass das Zugelement 5 in dem so gebildeten Spalt geklemmt ist. Hingegen erfolgt an dem anderen Auflagebereich 6b kein Klemmen, da dort der Abstand zu der anderen Gehäusehälfte 15 deutlich größer ist, und vor allem größer ist als die Dicke des hindurchgeführten Zugelements.

Der Sensor 11 kann ein druckaufnehmender oder ein federbelasteter, wegaufnehmender Sensor sein. Je größer die Zugkraft in dem Spanngurt 5 ist, desto stärker ist das elektrische Signal des Sensors 11. Vorzugsweise lassen sich die Gehäusehälften 15, 16 voneinander trennen oder öffnen, um so den Spanngurtabschnitt einlegen zu können. Ist dieser eingelegt, erfährt er in dem Gehäuse eine seitliche Auslenkung, wie Figur 2 erkennen lässt.

In der Gehäusehälfte 15, die den Sensor 11 aufnimmt, befindet sich als Teil der Überwachungseinheit 10 eine Sendeeinheit 12. Ferner befindet sich in derselben Gehäusehälfte 15 eine Batterie 14 als elektrische Spannungsquelle. Die Batterie 14 liefert die erforderliche Betriebsspannung für den Sensor 11 und für die Sendeeinheit 12.

Bestandteile der Überwachungseinheit 10 sind außerdem ein Speicher für durch den Sensor 11 erfasste oder aus den Sensorsignalen abgeleitete Kraftwerte, ein Vergleichsmodul, welches aktuelle und bereits vorher erfasste Kraftwerte vergleichen und hieraus Differenzwerte bilden kann, sowie eine Anzeige 13. Die Anzeige 13 ist hier optischer Art und ist aus mehreren, stromsparenden LED's zusammengesetzt.

Ferner kann an dem Gehäuse 15, 16 eine Batterie-Zustandsanzeige vorhanden sein.

Zum Überwachen der Transportsicherungen wird jeder Spanngurt 5 mit der oben beschriebenen Überwachungseinheit 10 versehen. Der Sensor 11 erfasst einen für die Zugkraft in dem Spanngurt 5 repräsentativen Kraftwert als Istwert. Die Sendeeinheit 12 übermittelt entsprechende Statussignale drahtlos an eine auf demselben Transportfahrzeug 1 vorzugsweise beim Fahrer vorhandene Kontrolleinheit 20. Die durch die Sendeeinheit 12 an die Kontrolleinheit 20 übermittelten Statussignale umfassen unter anderem, aber nicht ausschließlich
- den für die aktuelle Zugkraft im Spanngurt 5 repräsentativen Istwert zusammen mit einem bereits zuvor in der Überwachungseinheit 10 gespeicherten Sollwert, oder
- einen aus dem Istwert und dem bereits zuvor in der Überwachungseinheit 10 gespeicherten Sollwert abgeleiteten Differenzwert.

Nicht nur der für die aktuelle Zugkraft in dem Spanngurt 5 repräsentative Istwert wird der Kontrolleinheit 20 übermittelt, sondern auch der als Vergleichswert dienende Sollwert oder ein Differenzwert aus dem Soll- und dem aktuellen Istwert. Denn in der Praxis des Transportgewerbes ist es häufig, dass der Fahrer bzw. Fahrzeuglenker wechselt. Ein solcher Wechsel würde dann auch die vom Fahrer persönlich mitgeführte, z.B. als Smartphone ausgebildete Kontrolleinheit betreffen. Wären die Sollwerte ausschließlich in der Kontrolleinheit 20 abgespeichert, müssten diese Vergleichsdaten bei einem Fahrerwechsel zunächst von der vom bisherigen Fahrer mitgeführten Kontrolleinheit 20 auf die von dem neuen Fahrer mitgeführte Kontrolleinheit 20 übertragen werden, etwa durch einen entsprechenden drahtlosen Datenaustausch über Bluetooth. Diese Schritte entfallen, wenn die Sollwerte in dem Speicher der Überwachungseinheit 10 abgespeichert bleiben und stets gemeinsam mit den aktuellen Istwerten an die Kontrolleinheit 20 übermittelt werden.

Der Sensor 11 erfasst den für den tatsächlichen Kraftwert im Spanngurt repräsentativen Istwert in regelmäßigen, vorgegebenen Zeitabständen. Die Zeitabstände können in der Überwachungseinheit 10 fest vorgegeben oder daran einstellbar sein. Von Vorteil ist, wenn die Sendeeinheit Statussignale an die Kontrolleinheit 20 übermittelt
- in regelmäßigen, vorgegebenen Zeitabständen
- und/oder sobald der von dem Sensor 11 aktuell erfasste Istwert oder eine Gruppe aktuell erfasster Istwerte mehr als eine vorgegebene Abweichung von einem vorher erfassten Istwert oder einer Gruppe vorher erfasster Istwert aufweist.

Gemäß Fig. 3 erfolgt das Festlegen des Sollwerts automatisch beim Festzurren der Ladung. Denn als Sollwert speichert die Überwachungseinheit 10 automatisch jenen Kraftwert ab, den der Sensor 11 zum Zeitpunkt des maximalen Festzurrens des überwachten Zugelements 5 oder unmittelbar danach als Zugkraft ermittelt. Als Zeitpunkt des maximalen Festzurrens wird insbesondere jener Zeitpunkt angenommen, zu dem die Zugkraft F in dem Spanngurt 5 nach einem Ansteigen einen anschließend nicht mehr überschrittenen Maximalwert aufweist, etwa in Form eines Plateaus 30 (Fig. 3), welches die Kraftkurve nach dem Festzurren zunächst einmal zeigt.

Zum Zwecke einer externen Datenauswertung und Kontrolle besteht die Möglichkeit, dass die Sendeeinheit 12 die Statussignale außer an die Kontrolleinheit 20 auch an einen stationären Empfänger zur Auswertung übermittelt. Dieser Empfänger kann z.B. das für den Transport zuständige Logistikunternehmen sein, wo per Telematik die entsprechenden Statussignale zur Ladungssicherung aller derzeit bewegten Fahrzeuge eingehen, und so die Ladungssicherung aus der Ferne überprüfbar ist. Alternativ besteht die Möglichkeit, dass nicht die Überwachungseinheit 10 selbst, sondern die Kontrolleinheit 20 die an sie übermittelten Statussignale an den stationären Empfänger zur Auswertung und Kontrolle übermittelt.

Die Kontrolleinheit 20 gibt ein für den Fahrer gut wahrnehmbares optisches oder akustisches Warnsignal ab, sobald der aus dem Istwert und dem gespeicherten Sollwert abgeleitete Differenzwert einen vorgegebenen Grenzwert übersteigt oder eine zu starke prozentuale Abweichung zeigt, da die Spannung im Spanngurt 5 zu stark nachgelassen hat.

Da auf dem Fahrzeug mehrere Spanngurte 5 parallel und unabhängig voneinander zu überwachen sind, umfassen die durch die Sendeeinheit 12 übermittelten Signale außerdem eine Gerätekennung, also ein für die Überwachungseinheit 10 gerätespezifisches Identifikationssignal. Die Gerätekennungen aller auf dem Transportfahrzeug 1 vorhandenen Überwachungseinheiten 10 sind zueinander unterschiedlich und auf diese Weise ohne Verwechslung identifizierbar.

Auch unmittelbar an der Überwachungseinheit 10 erfolgt die optische Anzeige 13 für Kraftwerte, nämlich in Gestalt einer außen am Gehäuse der Überwachungseinheit 10 angeordneten LED-Reihe. Dabei werden vorzugsweise kein expliziten Kraftwerte angegeben.

Die LEDs können auch in Gruppen angeordnet sein, wobei die Gruppen für bestimmte Wertebereiche der Zugkraft stehen. Die Anzeige 13 ist im vorliegenden Beispiel in zwei Wertebereiche aufgeteilt, von denen der erste für die Sicherung von solchen Ladegütern steht, bei denen mit hoher Zugspannung in den Spanngurten gearbeitet werden kann. Hingegen steht der zweite Wertebereich der Anzeige 13 für solche Güter, bei denen, etwa wegen der mechanischen Empfindlichkeit dieser Güter, die Zugkraft im Spanngurt geringer sein muss.

Um Energie zu sparen, sollte zwar gemäß Figur 3 die Anzeige 13 bei einem Festzurren des Spanngurts und dem damit verbundenen Ansteigen der durch den Sensor 11 erfassten Zugkraft F automatisch einschalten. Sie sollte jedoch nach einer vorgegebenen Zeitdauer wieder ausschalten. Diese Zeitdauer beginnt, sobald der Sollwert feststeht bzw. abgespeichert ist.

Die in der Nähe des Fahrers angeordnete Kontrolleinheit 20 umfasst ein Empfangsmodul 22 zum Empfangen der Statussignale, ein diese Signale verarbeitendes Rechenmodul 24 und eine durch das Rechenmodul 24 gesteuerte Anzeige 23.

Diese Anzeige ist ein durch das Rechenmodul 24 angesteuertes Display 23. Dessen Benutzeroberfläche ist graphisch in einzelne Display-Zonen 23a, 23b, 23c unterteilt, von denen jede Display-Zone einer einzelnen Überwachungseinheit 10 zugeordnet ist, und ausschließlich Daten und Werte mit Bezug zu dieser Überwachungseinheit 10 wiedergibt.

Die Signalübertragung zwischen Überwachungseinheit 10 und Kontrolleinheit 20 erfolgt drahtlos über Bluetooth oder eine WLAN-Verbindung. Die Kontrolleinheit 20 selbst ist vorzugsweise ein Smartphone. Denn praktisch jeder Fahrzeuglenker führt ein Smartphone mit sich, so dass zusätzliche Geräte nicht erforderlich sind und ebenso wenig ein Gerätetausch notwendig ist, etwa bei einem Wechsel des bisherigen Fahrzeuglenkers auf einen neuen Fahrzeuglenker.

Ist die Kontrolleinheit 20 ein Smartphone, so ist das Rechenmodul 24 eine auf dem Smartphone vorhandene Applikation (App). Die Benutzeroberfläche auf dem Smartphone-Display ist in der Weise graphisch ausgestaltet, dass für jede der Überwachungseinheiten 10 in Zahlenwerten und/oder in graphisch veranschaulichten Größen dargestellt sind
- der Istwert zusammen mit dem Sollwert oder in Bezug auf den Sollwert,
- oder ein vorzugsweise in der Überwachungseinheit aus dem Istwert und dem Sollwert abgeleiteter Differenzwert.

In der Regel befinden sich auf dem Transportfahrzeug 1 mehrere Spanngurte 5 und damit auch mehrere Überwachungseinheiten 10. Um dem Fahrer im Fall einer Negativmeldung das Auffinden des zugehörigen Spanngurts zu erleichtern, ist ein Ortungssystem vorhanden. Hierzu sind das Empfangsmodul 22 und das Rechenmodul 24 dazu ausgebildet, für jede Überwachungseinheit 10 die von dort empfangene Signalstärke zu erfassen, und so die Signalstärken zur Ortung der jeweiligen Überwachungseinheit zu nutzen. Praktisch geschieht dies, indem der Fahrer mit der Kontrolleinheit 20 bzw. dem Smartphone in der Hand an der Ladefläche 2 entlang geht, und ihm über das Display 23 aufgrund der von den einzelnen Sendeeinheiten 12 empfangenen Signalstärken mitgeteilt wird, welche Überwachungseinheit 10 diejenige ist, von der eine Negativmeldung ausgeht.

Ebenfalls zur erleichterten Ortung einer Überwachungseinheit 10, von der eine Negativmeldung ausgeht, sind die Kontrolleinheit 20 und die Überwachungseinheit 10 auch für einen umgekehrten Kommunikationsweg ausgebildet, also mit einem von der Kontrolleinheit 20 an die Überwachungseinheit 10 gesendeten Rufsignal. Bei Erhalt des Rufsignals schaltet die Überwachungseinheit 10 automatisch ein optisches oder ein akustisches Suchsignal und schaltet dieses nach einer vorgegebenen Zeitdauer wieder aus, um Batteriestrom zu sparen.

In dem zweiteiligen Gehäuse 15, 16 ist ein Beschleunigungssensor 35 angeordnet ist. Dieser erfasst Stoßereignisse, welche die aktuellen Istwerte beeinflussen können, so dass sich solche Ereignisse bei der rechnerischen Signalauswertung berücksichtigen lassen. Außerdem lässt sich mittels des Beschleunigungssensors 35 die Winkellage des Gehäuses 15, 16 feststellen, und damit der Zugwinkel des Spanngurts 5.

Die Überwachungseinheit 10 ist dazu eingerichtet, die Restspannung der Batterie 14 zu überwachen, wobei die Sendeeinheit 12 entsprechende Batteriezustandssignale drahtlos an die Kontrolleinheit 20 übermittelt. Die übermittelten Statussignale umfassen also auch Batteriezustandssignale. Ferner erfolgt direkt an der Überwachungseinheit 10 eine vorzugsweise optische Anzeige für den Batteriezustand, vorzugweise ergänzt durch eine Alarmfunktion.

Um Batteriestrom in der autarken Spannungsversorgung der einzelnen Überwachungseinheiten 10 zu sparen, werden verschiedene Maßnahmen getroffen.

Eine Maßnahme besteht darin, dass sich die Überwachungseinheit 10 automatisch einschaltet und dann auch eingeschaltet bleibt, wenn und solange die durch den Sensor 11 erfassten Werte größer als Null sind. Die Überwachungseinheit 10 schaltet selbsttätig aus, wenn die erfassten Werte auf null gefallen sind, und seitdem eine vorgegebene Zeitdauer verstrichen ist. Diese Zeitdauer sollte mindestens 10 Minuten betragen. Denn ein Abfallen des Istwerts auf null kann z.B. durch ein völliges Versagen des Spanngurts 5 ausgelöst sein. Gerade in dieser Situation ist es wichtig, dass für einen gewissen Zeitraum weiterhin Statussignale gesendet werden, damit der Fahrer diese Situation mittels der Kontrolleinheit 20 realisieren kann.

Von Vorteil ist, wenn auch bei ausgeschalteter und passiver Überwachungseinheit, wenn also die Ist-Spannkraft und die Soll-Spannkraft null betragen, die Überwachungseinheit 10 zumindest ihre Gerätekennung als Identifikationssignal sendet, so dass die Kontrolleinheit 20 die Anwesenheit des Geräts feststellen kann. Auch die fortdauernde Überwachung der Batteriespannung ist in diesem Fall zweckmäßig.

Der Sensor 11 misst die Zugkraft F in regelmäßigen, aber kurzen Zeitabständen von zum Beispiel einer Sekunde, da der Beginn eines Zurrvorgang jederzeit kurzfristig erkannt werden muss. Hingegen kann das Senden der Statussignale auch in größeren Zeitabständen von zum Beispiel 10 Sekunden erfolgen.

Wird ein Anstieg der Ist-Spannkraft detektiert, wird zuerst die Anzeige eingeschaltet, so dass der Nutzer möglichst schnell eine Rückmeldung erhält. Ferner wird in diesem Fall die Zeitabstände zwischen den Messungen verkürzt, etwa von einer 1 Sekunde auf 0.1 Sekunde, um so den Zurrvorgang vollständig detektieren zu können und daraus den Sollwert zu ermitteln, etwa durch Auswertung der Kurve des Zugspannungsverlaufs im Spanngurt.

Sofern eindeutig ein Zurrvorgang detektiert wurde, sollte auch das Sendeintervall stark verkürzt werden, etwa von 10 Sekunden auf nur 0,1 Sekunde, damit der Nutzer in zeitlicher Präzision die Datenanzeige auf der Kontrolleinheit 20 beobachten kann.

Ist, wie in Figur 3 anhand des Verlaufs der Zugkraft F über der Zeitachse t wiedergegeben, das Festzurren des Spanngurts abgeschlossen, so wird als Sollwert die auf einem Plateau 30, welches auf eine kurze Zugkraftspitze folgt, sich einstellende Zugkraft F festgesetzt. Denn die Zugkraft F verharrt, unmittelbar nach dem Festzurren, zunächst auf diesem Plateau 30. Dieser dem Plateau 30 entsprechende Maximalwert wird als Sollwert gespeichert, und fortan verwendet.

Ist die Sollwertbestimmung abgeschlossen und der Sollwert im Speicher der Überwachungseinheit 10 abgelegt, wird die Anzeige wieder ausgeschaltet. Das Sendeintervall wird wieder auf zum Beispiel 10 Sekunden verlängert, und eine regelmäßige Versendung des Statuswerts aus Ist- und Sollwert und zugleich des Identifikationssignals erfolgt. Das Messintervall wird wieder auf zum Beispiel 1 Sekunde gesetzt, so dass ein erneutes Zurren kurzfristig erkannt werden kann. Auch hier ist eine Versendung des Signals über die Batteriespannung zweckmäßig.

Sollte später ein erneuter Anstieg der Zugkraft F über der Zeitachse t festgestellt werden, wird erneut zuerst das Messintervall verkürzt und die Anzeige an der Kontrolleinheit 20 eingeschaltet. Nach einer eindeutigen Detektion eines weiteren Festzurrens des Spanngurts wird die Prozedur wiederholt.

Sollte kein Zurrvorgang vorliegen, sondern nur z.B. ein starker Anstieg der Spanngurtbelastung bei einer Kurvenfahrt, wird die Anzeige sofort ausgeschaltet, und die Mess- und Sendeintervalle werden angepasst. Fällt die Vorspannkraft auf null, wird die Soll-Spannkraft nach einer gewissen Zeit auf null gesetzt. Die Kontrolleinheit 20 kümmert sich in diesem Fall um die Unterscheidung zwischen Entladen und einem Gurtversagen.

Alle funktionalen Einheiten werden optimal eingestellt bezüglich ihrer Intervalle: die Recheneinheit, die Funkschnittstelle, der Analog-Digital-Wandler (ADC) für den Sensor, der Sensor selbst, die Anzeige, der Beschleunigungssensor und die ADC für die Batterie.

Alle funktionalen Einheiten sind auch nur so lange aktiviert, wie dies für die jeweilige Funktion notwendig ist. Diese Funktionen sind Ruhezustand, ungewisser Zurrvorgang, sicherer Zurrvorgang, festgezurrter Zustand. Das Messen der Batteriespannung könnte z.B. auch nur täglich erfolgen, wohingegen die zeitlichen Messintervalle des Sensors 11 im Fall von Schockereignissen sogar mehrere hundert Herz betragen könnten.

### Bezugszeichenliste

- 1: Transportfahrzeug
- 2: Ladefläche
- 3: Ladung, Stückgut
- 5: Zugelement, Spanngurt
- 5a: Gurteintrittsseite
- 5b: Gurtaustrittsseite
- 6a: Auflagebereich
- 6b: Auflagebereich
- 7: Verlagerungselement
- 8: Auflagebereich

- 10: Überwachungseinheit
- 11: Sensor
- 12: Sendeeinheit
- 13: Anzeige
- 14: Batterie
- 15: erste Gehäusehälfte
- 16: zweite Gehäusehälfte

- 20: Kontrolleinheit
- 22: Empfangsmodul
- 23: Display, Anzeige
- 23a: Display-Zone
- 23b: Display-Zone
- 23c: Display-Zone
- 24: Rechenmodul

- 30: Plateau, Sollwert
- 35: Beschleunigungssensor

- F: Zugkraft
- t: Zeitachse

## Patentansprüche

1. Verfahren zum Überwachen von mittels Zugelementen (5) und vorzugsweise Spanngurten arbeitenden Transportsicherungen an einem Transportfahrzeug (1), bei dem mindestens zwei der Zugelemente (5) mit jeweils mindestens einer daran befestigten Überwachungseinheit (10) versehen werden, die mindestens einen Sensor (11) und eine Sendeeinheit (12) umfasst, wobei der Sensor (11) einen für die Zugkraft (F) in dem Zugelement (5) repräsentativen Istwert erfasst, und die Sendeeinheit (12) Statussignale drahtlos an eine auf demselben Transportfahrzeug (1) vorhandene Kontrolleinheit (20) übermittelt, wobei die übermittelten Statussignale mindestens umfassen
- den Istwert zusammen mit einem bereits zuvor in der Überwachungseinheit (10) gespeicherten Sollwert, oder
- einen aus dem Istwert und dem bereits zuvor in der Überwachungseinheit (10) gespeicherten Sollwert abgeleiteten Differenzwert,
**dadurch gekennzeichnet, dass** die Überwachungseinheit (10) selbsttätig als Sollwert jene Zugkraft (F) abspeichert, die der Sensor (11) zum Zeitpunkt des maximalen Festzurrens des überwachten Zugelements (5) oder unmittelbar nach diesem Zeitpunkt als Istwert erfasst.

2. Verfahren nach Anspruch 1, **dadurch gekennzeichnet, dass** der Sensor (11) den Istwert in regelmäßigen, vorgegebenen Zeitabständen erfasst.

3. Verfahren nach Anspruch 2, **dadurch gekennzeichnet, dass** die Sendeeinheit (12) Statussignale an die Kontrolleinheit (20) übermittelt
- in regelmäßigen, vorgegebenen Zeitabständen
- und/oder sobald der von dem Sensor (11) aktuell erfasste Istwert oder eine Gruppe aktuell erfasster Istwerte mehr als eine vorgegebene Abweichung von einem vorher erfassten Istwert oder einer Gruppe vorher erfasster Istwerte aufweist.

4. Verfahren nach einem der Ansprüche 1 bis 3, **dadurch gekennzeichnet, dass** als Zeitpunkt des maximalen Festzurrens jener angenommen wird, zu dem die Zugkraft (F) in dem Zugelement (5) nach einem Ansteigen einen anschließend nicht mehr überschrittenen Maximalwert aufweist.

5. Verfahren nach einem der Ansprüche 1 bis 4, **dadurch gekennzeichnet, dass** die Sendeeinheit (12) die Statussignale außer an die Kontrolleinheit (20) auch an einen stationären Empfänger zur Auswertung übermittelt.

6. Verfahren nach einem der Ansprüche 1 bis 4, **dadurch gekennzeichnet, dass** die Kontrolleinheit (20) die an sie übermittelten Statussignale an einen stationären Empfänger zur Auswertung übermittelt.

7. Verfahren nach einem der vorangehenden Ansprüche, **dadurch gekennzeichnet, dass** die Kontrolleinheit (20) ein optisches und/oder akustisches Warnsignal abgibt, sobald der aus dem Istwert und dem gespeicherten Sollwert abgeleitete Differenzwert einen vorgegebenen Grenzwert übersteigt.

8. Verfahren nach einem der vorangehenden Ansprüche, **dadurch gekennzeichnet, dass** die durch die Sendeeinheit (12) übermittelten Statussignale außerdem eine Gerätekennung umfassen, wobei die Gerätekennungen aller auf dem Transportfahrzeug (1) vorhandener Überwachungseinheiten (10) zueinander unterschiedlich sind.

9. Verfahren nach einem der vorangehenden Ansprüche, **dadurch gekennzeichnet, dass** die Überwachungseinheit (10) in einem Gehäuse angeordnet ist und von einer in dem Gehäuse angeordneten Spannungsquelle (14), vorzugsweise Batterie, mit elektrischer Energie versorgt wird.

10. Verfahren nach Anspruch 9, **dadurch gekennzeichnet, dass** die Überwachungseinheit (10) die Restspannung der Spannungsquelle (14) überwacht, und dass die Sendeeinheit (12) entsprechende Batteriezustandssignale drahtlos an die Kontrolleinheit (20) übermittelt.

11. Verfahren nach Anspruch 9 oder 10, **dadurch gekennzeichnet, dass** an der Überwachungseinheit (10) eine optische Anzeige für den Batteriezustand erfolgt, vorzugsweise einschließlich einer Alarmfunktion.

12. Verfahren nach einem der vorangehenden Ansprüche, **dadurch gekennzeichnet, dass** sich die Überwachungseinheit (10) selbsttätig einschaltet und sie eingeschaltet bleibt, wenn und solange durch den Sensor (11) erfasste Istwerte größer als Null sind, und dass sich die Überwachungseinheit (10) selbsttätig dann ausschaltet, wenn der Istwert auf null gefallen und seitdem eine vorgegebene Zeitdauer verstrichen ist.

13. Verfahren nach Anspruch 12, **dadurch gekennzeichnet, dass** die Zeitdauer mindestens 10 Minuten beträgt.

14. Verfahren nach einem der vorangehenden Ansprüche, **dadurch gekennzeichnet, dass** unmittelbar an der Überwachungseinheit (10) eine optische Anzeige (13) für Kraftwerte erfolgt, vorzugsweise in Form einer außen an der Überwachungseinheit (10) angeordneten LED-Reihe.

15. Verfahren nach Anspruch 14, **dadurch gekennzeichnet, dass** die optische Anzeige (13) bei einem Ansteigen der durch den Sensor (11) erfassten Istwerte selbsttätig einschaltet, und nach einer vorgegebenen Zeitdauer wieder ausschaltet.

16. Verfahren nach einem der vorangehenden Ansprüche, **dadurch gekennzeichnet, dass** die Kontrolleinheit (20) ein Empfangsmodul (22) für die übermittelten Statussignale, ein diese Signale verarbeitendes Rechenmodul (24) und eine durch das Rechenmodul (24) gesteuerte Anzeige (23) umfasst.

17. Verfahren nach Anspruch 16, **dadurch gekennzeichnet, dass** die Anzeige (23) als Display ausgebildet ist, und gesteuert durch das Rechenmodul (24), grafisch in einzelne Display-Zonen unterteilt ist, wobei jede Display-Zone einer Überwachungseinheit (10) zugeordnet ist und ausschließlich Werte mit Bezug zu dieser Überwachungseinheit (10) wiedergibt.

18. Verfahren nach Anspruch 16 oder 17, **dadurch gekennzeichnet, dass** die Sendeeinheit (12) drahtlos über Bluetooth oder eine WLAN-Verbindung mit dem Empfangsmodul (22) der Kontrolleinheit (20) kommuniziert.

19. Verfahren nach einem der Ansprüche 16 bis 18, **gekennzeichnet durch** die Verwendung eines Smartphones als Kontrolleinheit (20).

20. Verfahren nach Anspruch 19, **dadurch gekennzeichnet, dass** das Rechenmodul (24) eine auf dem Smartphone abgelegte Applikation, und die Anzeige (23) das Smartphone-Display ist.

21. Verfahren nach einem der Ansprüche 16 bis 20, **dadurch gekennzeichnet, dass** die Anzeige (23) an der Kontrolleinheit (20) für jede der Überwachungseinheiten in Zahlenwerten und/ oder als grafisch veranschaulichte Größen wiedergibt
- den Istwert zusammen mit dem Sollwert, oder
- den in der Überwachungseinheit (10) aus dem Istwert und dem Sollwert abgeleiteten Differenzwert.

22. Verfahren nach einem der vorangehenden Ansprüche, **dadurch gekennzeichnet, dass** die Kontrolleinheit (20) eingerichtet ist, mittels eines Signalstärkeglieds für jede Überwachungseinheit (10) die Signalstärke der von dort empfangenen Signale zu erfassen.

23. Verfahren nach Anspruch 22, **dadurch gekennzeichnet, dass** das Signalstärkeglied eingerichtet ist, die erfassten Signale zu unterteilen in eine erste Gruppe aus Signalen von zeitlich im Wesentlichen stabiler Signalstärke und eine zweite Gruppe aus Signalen von zeitlich sich ändernder Signalstärke, und dass die Signale der zweiten Gruppe für die weitere Durchführung des Verfahrens ausgeblendet werden.

24. Verfahren nach einem der vorangehenden Ansprüche, **dadurch gekennzeichnet, dass** die Kontrolleinheit (20) und die Überwachungseinheit (10) auch für einen umgekehrten Kommunikationsweg mit einem von der Kontrolleinheit (20) an die Überwachungseinheit (10) gesendeten Rufsignal ausgebildet sind, und dass die Überwachungseinheit (10) bei Erhalt des Rufsignals ein optisches und/oder akustisches Suchsignal ein- und nach einer vorgegebenen Zeitdauer wieder ausschaltet.

25. Verfahren nach einem der vorangehenden Ansprüche, **dadurch gekennzeichnet, dass** die Überwachungseinheit (10) in einem Gehäuse angeordnet ist, in dem ein Beschleunigungssensor (35) angeordnet ist.

## Claims

1. Method for monitoring transport securing means on a transport vehicle (1) that operate by means of tensioning elements (5) and preferably tensioning belts, in which at least two of the tensioning elements (5) are provided with at least one monitoring unit (10) in each case, which is attached thereto and comprises at least one sensor (11) and a transmitting unit (12), the sensor (11) detecting an actual value which is representative of the tensile force (F) in the tensioning element (5), and the transmitting unit (12) transmitting status signals wirelessly to a control unit (20) present on the same transport vehicle (1), the transmitted status signals at least comprising
- the actual value together with a target value previously stored in the monitoring unit (10), or
- a difference value derived from the actual value and the target value previously stored in the monitoring unit (10),
**characterized in that** the monitoring unit (10) automatically stores the tensile force (F), which the sensor (11) detects as an actual value at the point in time of maximum lashing of the monitored tensioning element (5) or immediately after this point in time, as a target value.

2. Method according to claim 1, **characterized in that** the sensor (11) detects the actual value at regular, predetermined time intervals.

3. Method according to claim 2, **characterized in that** the transmitting unit (12) transmits status signals to the control unit (20)
- at regular, predetermined time intervals
- and/or as soon as the actual value currently detected by the sensor (11) or a group of currently detected actual values is more than a predetermined deviation from a previously detected actual value or a group of previously detected actual values.

4. Method according to any of claims 1 to 3, **characterized in that** the point in time of maximum lashing is assumed to be that at which the tensile force (F) in the tensioning element (5), after an increase, has a maximum value which is subsequently no longer exceeded.

5. Method according to any of claims 1 to 4, **characterized in that** the transmitting unit (12) transmits the status signals not only to the control unit (20) but also to a stationary receiver for evaluation.

6. Method according to any of claims 1 to 4, **characterized in that** the control unit (20) transmits the status signals transmitted to it to a stationary receiver for evaluation.

7. Method according to any of the preceding claims, **characterized in that** the control unit (20) emits an optical and/or acoustic warning signal as soon as the difference value derived from the actual value and the stored target value exceeds a predetermined limit value.

8. Method according to any of the preceding claims, **characterized in that** the status signals transmitted by the transmitting unit (12) also comprise a device identifier, the device identifiers of all monitoring units (10) present on the transport vehicle (1) being different from one another.

9. Method according to any of the preceding claims, **characterized in that** the monitoring unit (10) is arranged in a housing and is supplied with electrical energy by means of a voltage source (14), preferably a battery, arranged in the housing.

10. Method according to claim 9, **characterized in that** the monitoring unit (10) monitors the residual voltage of the voltage source (14), and **in that** the transmitting unit (12) transmits corresponding battery status signals wirelessly to the control unit (20).

11. Method according to claim 9 or claim 10, **characterized in that** an optical display for the battery status is provided on the monitoring unit (10), preferably including an alarm function.

12. Method according to any of the preceding claims, **characterized in that** the monitoring unit (10) switches itself on automatically and remains switched on if and as long as actual values detected by the sensor (11) are greater than zero, and **in that** the monitoring unit (10) switches itself off automatically when the actual value has fallen to zero and a predetermined time period has elapsed since then.

13. Method according to claim 12, **characterized in that** the time period is at least 10 minutes.

14. Method according to any of the preceding claims, **characterized in that** an optical display (13) for force values is provided directly on the monitoring unit (10), preferably in the form of a row of LEDs arranged on the outside of the monitoring unit (10).

15. Method according to claim 14, **characterized in that** the optical display (13) switches on automatically when the actual values detected by the sensor (11) increase, and switches off again after a predetermined time period.

16. Method according to any of the preceding claims, **characterized in that** the control unit (20) comprises a receiving module (22) for the transmitted status signals, a computing module (24) processing these signals and a display (23) controlled by the computing module (24).

17. Method according to claim 16, **characterized in that** the display (23) is designed as a display and, controlled by the computing module (24), is graphically divided into individual display zones, each display zone being assigned to a monitoring unit (10) and exclusively displaying values relating to this monitoring unit (10) .

18. Method according to claim 16 or claim 17, **characterized in that** the transmitting unit (12) communicates wirelessly via Bluetooth or a WLAN connection with the receiving module (22) of the control unit (20).

19. Method according to any of claims 16 to 18, **characterized by** the use of a smartphone as control unit (20).

20. Method according to claim 19, **characterized in that** the computing module (24) is an application stored on the smartphone, and the display (23) is the smartphone display.

21. Method according to any of claims 16 to 20, **characterized in that** the display (23) on the control unit (20) for each of the monitoring units shows, in numerical values and/or as graphically illustrated quantities,
- the actual value together with the target value, or
- the difference value derived from the actual value and the target value in the monitoring unit (10).

22. Method according to any of the preceding claims, **characterized in that** the control unit (20) is designed to detect the signal strength of the signals received from each monitoring unit (10) by means of a signal strength member for each monitoring unit.

23. Method according to claim 22, **characterized in that** the signal strength member is arranged to divide the detected signals into a first group of signals of temporally substantially stable signal strength and a second group of signals of temporally changing signal strength, and **in that** the signals of the second group are masked out for the further implementation of the method.

24. Method according to any of the preceding claims, **characterized in that** the control unit (20) and the monitoring unit (10) are also designed for a reverse communication path with a call signal sent from the control unit (20) to the monitoring unit (10), and **in that** the monitoring unit (10) switches an optical and/or acoustic search signal on when it receives the call signal and switches it off again after a predetermined time period.

25. Method according to any of the preceding claims, **characterized in that** the monitoring unit (10) is arranged in a housing in which an acceleration sensor (35) is arranged.

## Revendications

1. Procédé pour la surveillance de dispositifs de sécurité de transport fonctionnant au moyen d'éléments de traction (5) et de préférence de sangles de serrage sur un véhicule de transport (1) dans lequel au moins deux des éléments de traction (5) sont respectivement pourvus d'au moins une unité de surveillance (10) qui y est fixée et qui comprend au moins un capteur (11) et une unité d'émission (12), dans lequel le capteur (11) détecte une valeur réelle représentative de la force de traction (F) dans l'élément de traction (5), et l'unité d'émission (12) transmet sans fil des signaux d'état à une unité de contrôle (20) présente sur le même véhicule de transport (1), dans lequel les signaux d'état transmis comprennent au moins
- la valeur réelle conjointement avec une valeur de consigne déjà enregistrée auparavant dans l'unité de surveillance (10), ou
- une valeur différentielle déduite de la valeur réelle et de la valeur de consigne déjà enregistrée auparavant dans l'unité de surveillance (10),
**caractérisé en ce que** l'unité de surveillance (10) enregistre automatiquement comme valeur de consigne la force de traction (F) que le capteur (11) détecte comme valeur réelle au moment du serrage maximal de l'élément de traction (5) surveillé ou immédiatement après ledit moment.

2. Procédé selon la revendication 1, **caractérisé en ce que** le capteur (11) détecte la valeur réelle à intervalles réguliers prédéterminés.

3. Procédé selon la revendication 2, **caractérisé en ce que** l'unité d'émission (12) transmet des signaux d'état à l'unité de contrôle (20)
- à intervalles réguliers prédéterminés
- et/ou dès que la valeur réelle actuellement détectée ou qu'un groupe de valeurs réelles actuellement détectées par le capteur (11) présente plus d'un écart prédéterminé par rapport à une valeur réelle précédemment détectée ou à un groupe de valeurs réelles précédemment détectées.

4. Procédé selon l'une des revendications 1 à 3, **caractérisé en ce que** l'on considère comme moment du serrage maximal le où la force de traction (F) dans l'élément de traction (5) présente, après une augmentation, une valeur maximale qui n'est ensuite plus dépassée.

5. Procédé selon l'une des revendications 1 à 4, **caractérisé en ce que** l'unité d'émission (12) transmet les signaux d'état, outre à l'unité de contrôle (20), également à un récepteur stationnaire pour l'évaluation.

6. Procédé selon l'une des revendications 1 à 4, **caractérisé en ce que** l'unité de contrôle (20) transmet les signaux d'état qui lui sont transmis à un récepteur stationnaire pour l'évaluation.

7. Procédé selon l'une des revendications précédentes, **caractérisé en ce que** l'unité de contrôle (20) envoie un signal d'avertissement optique et/ou acoustique dès que la valeur différentielle déduite de la valeur réelle et de la valeur de consigne enregistrée franchit une valeur limite prédéterminée.

8. Procédé selon l'une des revendications précédentes, **caractérisé en ce que** les signaux d'état transmis par l'unité d'émission (12) comprennent en outre un identifiant d'appareil, dans lequel les identifiants d'appareil de toutes les unités de surveillance (10) présentes sur le véhicule de transport (1) sont différents les uns des autres.

9. Procédé selon l'une des revendications précédentes, **caractérisé en ce que** l'unité de surveillance (10) est disposée dans un boîtier et est alimentée en énergie électrique par une source de tension (14), de préférence une batterie, disposée dans le boîtier.

10. Procédé selon la revendication 9, **caractérisé en ce que** l'unité de surveillance (10) surveille la tension résiduelle de la source de tension (14), et **en ce que** l'unité d'émission (12) transmet sans fil des signaux d'état de batterie correspondants à l'unité de contrôle (20) .

11. Procédé selon la revendication 9 ou 10, **caractérisé en ce que**, sur l'unité de surveillance (10), un affichage optique pour l'état de batterie est effectué, y compris de préférence une fonction d'alarme.

12. Procédé selon l'une des revendications précédentes, **caractérisé en ce que** l'unité de surveillance (10) s'active automatiquement et reste activée si et tant que les valeurs réelles détectées par le capteur (11) sont supérieures à zéro, et **en ce que** l'unité de surveillance (10) se désactive alors automatiquement lorsque la valeur réelle est tombée à zéro et qu'une durée prédéterminée s'est écoulée depuis.

13. Procédé selon la revendication 12, **caractérisé en ce que** la durée est d'au moins 10 minutes.

14. Procédé selon l'une des revendications précédentes, **caractérisé en ce que**, directement sur l'unité de surveillance (10), un affichage optique (13) pour des valeurs de force est effectué, de préférence sous forme d'une rangée de DEL disposée à l'extérieur de l'unité de surveillance (10).

15. Procédé selon la revendication 14, **caractérisé en ce que** l'affichage optique (13) s'active automatiquement lors d'une augmentation des valeurs réelles détectées par le capteur (11), et se désactive à nouveau après une durée prédéterminée.

16. Procédé selon l'une des revendications précédentes, **caractérisé en ce que** l'unité de contrôle (20) comprend un module de réception (22) pour les signaux d'état transmis, un module de calcul (24) traitant lesdits signaux et un affichage (23) commandé par le module de calcul (24).

17. Procédé selon la revendication 16, **caractérisé en ce que** l'affichage (23) est réalisé comme un écran, est commandé par le module de calcul (24) et est divisé graphiquement en zones d'écran individuelles, dans lequel chaque zone d'écran est associée à une unité de surveillance (10) et reproduit exclusivement des valeurs en rapport avec ladite unité de surveillance (10) .

18. Procédé selon la revendication 16 ou 17, **caractérisé en ce que** l'unité d'émission (12) communique sans fil avec le module de réception (22) de l'unité de contrôle (20) par l'intermédiaire d'une connexion Bluetooth ou WLAN.

19. Procédé selon l'une des revendications 16 à 18, **caractérisé par** l'utilisation d'un mobile multifonction comme unité de contrôle (20).

20. Procédé selon la revendication 19, **caractérisé en ce que** le module de calcul (24) est une application téléchargée sur le mobile multifonction, et l'affichage (23) est l'écran du mobile multifonction.

21. Procédé selon l'une des revendications 16 à 20, **caractérisé en ce que** l'affichage (23) sur l'unité de contrôle (20) reproduit, pour chacune des unités de surveillance, en valeurs numériques et/ou en grandeurs représentées graphiquement,
- la valeur réelle conjointement avec la valeur de consigne, ou
- la valeur différentielle déduite de la valeur réelle et de la valeur de consigne dans l'unité de surveillance (10).

22. Procédé selon l'une des revendications précédentes, **caractérisé en ce que** l'unité de contrôle (20) est configurée pour détecter, au moyen d'un circuit d'intensité de signal, pour chaque unité de surveillance (10), l'intensité de signal des signaux qui y sont reçus.

23. Procédé selon la revendication 22, **caractérisé en ce que** le circuit d'intensité de signal est configuré pour diviser les signaux détectés en un premier groupe de signaux d'intensité de signal sensiblement stable dans le temps et un second groupe de signaux d'intensité de signal variable dans le temps, et **en ce que** les signaux du second groupe sont masqués pour la suite de la mise en œuvre du procédé.

24. Procédé selon l'une des revendications précédentes, **caractérisé en ce que** l'unité de contrôle (20) et l'unité de surveillance (10) sont également configurées pour un trajet de communication inverse comportant un signal d'appel émit par l'unité de contrôle (20) sur l'unité de surveillance (10), et **en ce que** l'unité de surveillance (10) active un signal de recherche optique et/ou acoustique à l'obtention du signal d'appel et le désactive à nouveau après une durée prédéterminée.

25. Procédé selon l'une des revendications précédentes, **caractérisé en ce que** l'unité de surveillance (10) est disposée dans un boîtier dans lequel est disposé un capteur d'accélération (35).
